# EUROPEAN PATENT APPLICATION

(11) **EP 4 814 899 A1**
(43) Date of publication of application: **30.09.2026**
(21) Application number: 24893279.0
(22) Date of filing: 11.11.2024
(51) Int. Cl.: G06V 20/56

(54) **OCCUPANCY GRID PREDICTION METHOD AND APPARATUS, SMART DEVICE, AND STORAGE MEDIUM**

(30) Priority: 22.11.2023 CN 202311558724
(71) Applicant: Anhui NIO Autonomous Driving Technology Co., Ltd., Hefei, Anhui 230601 (CN)
(72) Inventor: REN, Shaoqing, Hefei, Anhui 230601 (CN); WANG, Shiting, Hefei, Anhui 230601 (CN); LI, Bin, Hefei, Anhui 230601 (CN); ZHOU, Xin, Hefei, Anhui 230601 (CN)
(74) Representative: Vossius & Partner Patentanwälte Rechtsanwälte mbB
(86) International application number: PCT/CN2024/131253
(87) International publication number: WO 2025/108121

(57) **Abstract**

The present application relates to the field of automated driving, and more particularly to an occupancy grid prediction method, an occupancy grid prediction apparatus for implementing the method, a computer storage medium for implementing the method, and a smart device having the occupancy grid prediction apparatus. The method includes: obtaining vision-only images of surroundings of a vehicle; inputting the vision-only images into an occupancy grid prediction model; and determining, using the occupancy grid prediction model, occupancy results of objects in the vision-only images as a model output, where the model output is occupancy results in pillar form, and the occupancy grid prediction model is constructed based on a training dataset containing sample images and ground truth information of the sample images, the ground truth information being directly generated from point cloud data or being converted from occupancy information in voxel form generated based on the point cloud data.

## Description

The present application claims priority to Chinese Patent Application No. 202311558724.3, filed on November 22, 2023 and entitled "OCCUPANCY GRID PREDICTION METHOD AND APPARATUS, SMART DEVICE, AND STORAGE MEDIUM", which is incorporated herein by reference in its entirety.

### Technical Field

The present application relates to the field of automated driving, and more particularly to an occupancy grid prediction method, an occupancy grid prediction apparatus for implementing the method, a computer storage medium for implementing the method, and a smart device having the occupancy grid prediction apparatus.

### Background Art

The safe operation of autonomous vehicles requires an accurate and comprehensive reflection of the surrounding environment around the vehicle. A three-dimensional (3D) vehicle perception module mainly consists of 3D object detection, multi-object tracking, and trajectory prediction. However, object-centered perception techniques may fail in open-world traffic scenarios where the shape or appearance of the object is unclear. Such obstacles, also referred to as long-tail obstacles, include deformable obstacles such as two-section trailers, irregularly shaped obstacles such as overturned vehicles, obstacles of unknown categories such as debris and garbage on the road, partially occluded objects, etc. Therefore, there is an urgent need for a more robust representation of these long-tail issues. In this regard, occupancy grid prediction is considered a very promising solution because it can provide occupancy and motion at any location in a 3D space around a vehicle without knowing the object. In this way, occupancy grid prediction will become an important prerequisite for supporting downstream driving tasks (for example, vehicle collision avoidance or vehicle trajectory planning).

Some occupancy grid prediction solutions use a model output in voxel form, which occupies a large amount of CPU resources during post-processing. This is not conducive to deployment and mass production of edge devices, and results in excessive data transmission pressure and application costs.

It should be noted that information disclosed in the Background Art section is only used to enhance the understanding of the background of the present application, and therefore may include information that does not constitute the prior art known to those of ordinary skill in the art.

### Summary

In order to solve or at least alleviate one or more of the above-mentioned problems, the following technical solutions are provided. Embodiments of the present application provide an occupancy grid prediction method, an occupancy grid prediction apparatus for implementing the method, a computer storage medium for implementing the method, and a smart device having the occupancy grid prediction apparatus, which can reduce the training time of an automated driving function and the time delay during deployment, facilitating the deployment on mass-produced vehicles, while also reducing time consumption of post-processing and pressure of direct data transmission.

According to a first aspect of the present application, an occupancy grid prediction method is provided. The method includes the steps of: obtaining vision-only images of surroundings of a vehicle; inputting the vision-only images into an occupancy grid prediction model; determining, using the occupancy grid prediction model, occupancy results of objects in the vision-only images as a model output, where the model output is occupancy results in pillar form, and the occupancy grid prediction model is constructed based on a training dataset containing sample images and ground truth information of the sample images, the ground truth information being directly generated from point cloud data or being converted from occupancy information in voxel form generated based on the point cloud data.

As an alternative or supplement to the foregoing solution, in the occupancy grid prediction method according to an embodiment of the present application, the occupancy information in voxel form is generated at least based on the steps of: dividing a three-dimensional space into regular voxels and quantizing point cloud data in each voxel into occupancy information, where the occupancy information includes an occupancy state, a semantic category, a speed level, or a speed value of the voxel or a combination thereof.

As an alternative or supplement to the foregoing solution, in the occupancy grid prediction method according to an embodiment of the present application, the ground truth information being converted from the occupancy information in voxel form generated based on the point cloud data includes: performing offline data processing on the occupancy information in voxel form to generate compressed occupancy information in pillar form, and the occupancy information in voxel form is generated based on one or more of single-frame laser point cloud data, temporally fused laser point cloud data, or point cloud data generated from visual three-dimensional reconstruction.

As an alternative or supplement to the foregoing solution, in the occupancy grid prediction method according to an embodiment of the present application, performing the offline data processing on the occupancy information in voxel form includes: selecting voxels whose occupancy state is occupied as occupied voxels; projecting a three-dimensional space into two-dimensional grid cells; representing an aggregation of one or more occupied voxels falling within one two-dimensional grid cell as one or two pillars; and generating occupancy information of each pillar.

As an alternative or supplement to the foregoing solution, in the occupancy grid prediction method according to an embodiment of the present application, projecting the three-dimensional space into the two-dimensional grid cells includes: in an ego-vehicle coordinate system, dividing an x- and y-axis into regular two-dimensional grid cells according to a first resolution, where a positive direction of the x-axis is a forward direction of the vehicle, and a positive direction of the y-axis is a left side of the vehicle; and projecting a three-dimensional space falling within a two-dimensional grid cell on an xy plane into the two-dimensional grid cell, where the xy plane is a plane formed by the x-axis and the y-axis.

As an alternative or supplement to the foregoing solution, in the occupancy grid prediction method according to an embodiment of the present application, performing the offline data processing on the occupancy information in voxel form further includes: filtering out occupied voxels of an undesired type based on a semantic category; and/or filtering out occupied voxels whose z-axis coordinate is less than a first height threshold or greater than a second height threshold in the ego-vehicle coordinate system.

As an alternative or supplement to the foregoing solution, in the occupancy grid prediction method according to an embodiment of the present application, generating the occupancy information of each pillar includes: if a number of the occupied voxels falling within the pillar is greater than or equal to a third number threshold, labeling the pillar as occupied, and labeling upper and lower bounds of a height of the pillar as maximum and minimum heights of one or more occupied voxels falling within the pillar, respectively; and if the number of the occupied voxels falling within the pillar is less than the third number threshold, labeling the pillar as unoccupied, and labeling both the upper and lower bounds of the height of the pillar as 0.

As an alternative or supplement to the foregoing solution, in the occupancy grid prediction method according to an embodiment of the present application, the occupancy information of the pillar includes coordinate information of the pillar, and the coordinate information includes one of: pillar center coordinates and a pillar height in an ego-vehicle coordinate system; upper and lower bounds of the pillar height in the ego-vehicle coordinate system; the pillar center coordinates, the pillar height, and a ground height in the ego-vehicle coordinate system; or the upper and lower bounds of the pillar height and the ground height in the ego-vehicle coordinate system.

As an alternative or supplement to the foregoing solution, in the occupancy grid prediction method according to an embodiment of the present application, generating the occupancy information of each pillar includes: labeling a speed of the pillar as an average speed of one or more occupied voxels falling within the pillar; or if the average speed of the one or more occupied voxels falling within the pillar is greater than or equal to a fourth speed threshold, labeling the speed of the pillar as dynamic; otherwise, labeling the speed as static.

As an alternative or supplement to the foregoing solution, in the occupancy grid prediction method according to an embodiment of the present application, generating the occupancy information of each pillar includes: determining a semantic category of the pillar using a voting mechanism based on semantic categories of one or more occupied voxels falling within the pillar.

As an alternative or supplement to the foregoing solution, in the occupancy grid prediction method according to an embodiment of the present application, two-dimensional convolution is used in a head part of the occupancy grid prediction model.

According to a second aspect of the present application, an occupancy grid prediction apparatus is provided. The apparatus includes: a memory; a processor; and a computer program stored on the memory and executable on the processor, where execution of the computer program causes any one of the embodiments of the occupancy grid prediction method according to the first aspect of the present application to be performed.

According to a third aspect of the present application, a smart device is provided. The smart device has the occupancy grid prediction apparatus according to the second aspect of the present application.

According to a fourth aspect of the present application, a computer storage medium is provided. The computer storage medium includes instructions that, when executed, cause any one of the embodiments of the occupancy grid prediction method according to the first aspect of the present application to be performed.

The occupancy grid prediction solution according to one or more embodiments of the present application uses the vision-only images as input, and uses the occupancy information in pillar form in a training data processing phase (for example, the occupancy information in voxel form is compressed into pillar form, or the ground truth in pillar form is directly generated from the point cloud data), so that the occupancy result in pillar form is directly generated in a model output phase. Compared with the occupancy result in voxel form, the present solution greatly reduces the amount of central processing unit (CPU) resources occupied during post-processing and the pressure of direct data transmission, and reduces the time delay during deployment without affecting network inference during the deployment, thereby facilitating the deployment and mass production of edge devices (such as mobile phones, in-vehicle chips, and other devices with limited computing power).

### Brief Description of the Drawings

The above-described and/or other aspects and advantages of the present application will become more apparent and comprehensible from the following description of various aspects with reference to the accompanying drawings, in which the same or similar units are denoted by the same reference numerals. In the accompanying drawings:
FIG. 1 is a schematic flowchart of an occupancy grid prediction method 10 according to one or more embodiments of the present application;
FIG. 2 is a schematic flowchart of voxel-to-pillar form conversion according to one or more embodiments of the present application;
FIG. 3 is a schematic diagram of representing an aggregation of voxels as one pillar according to one or more embodiments of the present application;
FIG. 4 is a schematic diagram of an uphill field of view of a vehicle according to one or more embodiments of the present application;
FIG. 5 is a schematic diagram of a network design according to one or more embodiments of the present application;
FIG. 6 is a schematic diagram of model input and output according to one or more embodiments of the present application;
FIG. 7 is a schematic block diagram of an occupancy grid prediction apparatus 70 according to one or more embodiments of the present application; and
FIG. 8 is a schematic block diagram of a smart device 80 according to one or more embodiments of the present application.

### Detailed Description of Embodiments

The following descriptions of specific implementations are merely exemplary in nature, and are not intended to limit the disclosed technologies or the application and use of the disclosed technologies. In addition, they are not intended to be bound by any expressed or implied theory presented in the foregoing Technical Field and Background Art, or the following Detailed Description.

In the following detailed descriptions of embodiments, many specific details are set forth to provide a more thorough understanding of the disclosed technologies. However, it is clear to those of ordinary skill in the art that the disclosed technologies can be practiced without these specific details. In other instances, well-known features are not described in detail to avoid unnecessarily obscuring the description.

The terms such as "include" and "comprise" are used to indicate that in addition to units and steps that are directly and expressly described in this specification, the technical solutions of the present application further include other units and steps that are not directly or expressly described. The terms such as "first" and "second" are not used to indicate the sequence of units in time, space, size, etc., and are merely used to distinguish between the units. The technologies in the present application are typically used in electric vehicles, including, but not limited to, battery electric vehicles (BEVs), hybrid electric vehicles (HEVs), fuel cell electric vehicles (FCEVs), etc.

An automated driving system (ADS) refers to a system that continuously performs all dynamic driving tasks (DDTs) within its own operational domain design (ODD). That is, the machine system is only allowed to take full control of automated driving tasks of the vehicle under specified appropriate driving scenario conditions. In other words, when the vehicle meets the ODD conditions, the system is activated and takes over as the driver of the vehicle in place of the human driver. The dynamic driving task (DDT) refers to continuous lateral (left and right steering) and longitudinal motion control (acceleration, deceleration, and constant speed) of the vehicle, as well as detection of and response to objects and events in a driving environment of the vehicle. The operational domain design (ODD) refers to conditions under which the automated driving system can operate safely, and these set conditions may include geographical location, road types, speed ranges, weather, time, national and local traffic laws and regulations, etc.

A vision occupancy network is a deep learning-based visual perception technology that can serve as a supplement or alternative to lidar-based obstacle avoidance in automated driving. The occupancy network technology is based on visual signals and understands and processes spatial information through voxelization (i.e., 3D spatial units) on top of conventional 3D object detection capabilities. By incorporating voxel occupancy perception, the perception system can restore traversable areas of a 3D physical space with high fidelity, without needing to consider the nature of the object, but only considering whether the voxel is occupied. This fundamentally prevents the problem of missed detection of objects outside a training set in conventional vision, thereby greatly improving the generalization of the model and allowing it to adapt better to different scenarios and environments. In addition, compared with sparse and discontinuous point cloud data generated by lidar, information acquired by high-definition cameras is richer, allowing the occupancy network to better fuse 3D geometric information with semantic information, and helping the vehicle restore 3D scenes more accurately. However, some occupancy grid prediction solutions based on the vision occupancy network use a model output in voxel form. The massive amount of data accompanying fine-grained data will result in significant transmission pressure, whether it is transmitted directly downstream or used for visualization of mass-produced vehicles. In addition, the model output in voxel form occupies a large amount of CPU resources during post-processing, which is not conducive to deployment and mass production of edge devices. In this regard, the present application proposes using occupancy information in pillar form in a training data processing phase (for example, occupancy information in voxel form is compressed into pillar form, or the ground truth in pillar form is directly generated from point cloud data), so that an occupancy result in pillar form is directly generated in a model output phase, thereby reducing CPU resources occupied during post-processing and transmission pressure, and reducing the time delay during deployment without affecting network inference during the deployment.

Various example embodiments according to the present application will be described below in detail with reference to the accompanying drawings.

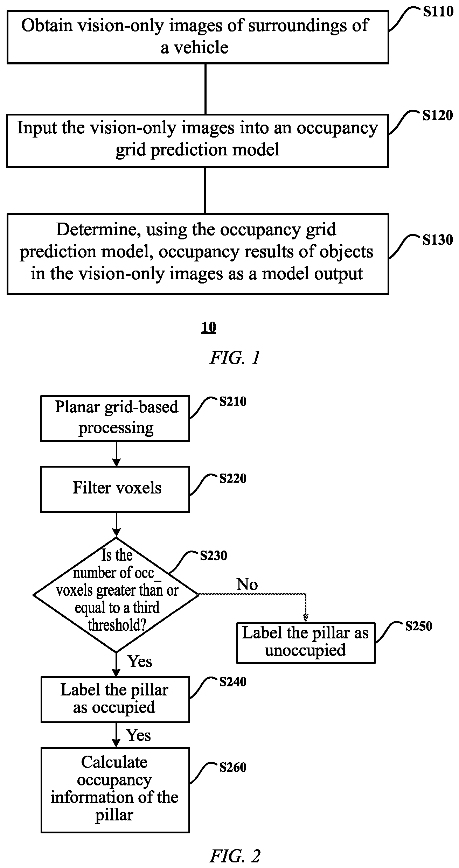

Reference is made to the accompanying drawings below. FIG. 1 is a schematic flowchart of an occupancy grid prediction method 10 according to one or more embodiments of the present application.

As shown in FIG. 1, in step S110, vision-only images of surroundings of a vehicle are obtained.

For example, according to one or more embodiments of the present application, a plurality of video acquisition units are used to acquire environmental information surrounding the vehicle from multiple views and output corresponding multi-view video data. The plurality of video acquisition units may be arranged at different preset positions on the vehicle, with each video acquisition unit corresponding to one view. For example, frame extraction may also be performed on the video data acquired by the multi-view video acquisition units (for example, a left-front camera, a front camera, and a right-front camera), and a sequence of vision-only images with timestamps may be generated. Herein, a camera, a lens, a video camera, a camera module, etc. all refer to devices capable of obtaining images or pictures within a coverage area. They have similar meanings and are interchangeable. This is not limited in the present application.

In step S120, the vision-only images obtained in step S110 are input into an occupancy grid prediction model; and in step S130, occupancy results of objects in the vision-only images are determined using the occupancy grid prediction model as a model output. The occupancy grid prediction model is constructed based on a training dataset containing sample images and ground truth information of the sample images, where the ground truth information is directly generated from point cloud data or is converted from occupancy information in voxel form generated based on the point cloud data.

It should be noted that the occupancy results output in step S130 is in pillar form, not voxel form. As mentioned above, the model output in voxel form generates a massive amount of data, which puts pressure on subsequent processing and transmission, making it not conducive to deployment and mass production of edge devices. In this regard, from the perspective of a data input amount for post-processing, since the occupancy results in pillar form only has a pillar height along a z-axis, a data processing amount is reduced by a factor corresponding to the number of voxels along the z-axis compared with data in voxel form.

In addition, when the ground truth information is converted from the occupancy information in voxel form generated based on the point cloud data, the present solution incorporates a voxel-to-pillar form conversion process in training data processing, rather than in a network inference step or a post-processing step. In this way, time consumption of the post-processing and pressure of direct transmission can be reduced without affecting network inference during the deployment.

Specifically, optionally, the occupancy results in pillar form may be implemented by one or more of the following steps S131 to S133. It should be noted that steps S131 to S133 apply only to a case where the ground truth information is converted from the occupancy information in voxel form generated based on the point cloud data. The present application does not specifically limit a method of generating the occupancy information in pillar or voxel form from the point cloud data.

In step S131, in a pre-processing phase of training data, a three-dimensional space is divided into regular voxels, and point cloud data in each voxel is quantized into occupancy information.

A voxel is an abbreviation of a volume element (volume pixel) and is the smallest unit of data located on a regular grid in the three-dimensional space. Step S131 is intended for voxelization of the point cloud data. The voxelization is a process of using voxels to approximately represent a spatial structure and a geometric shape of a scene or an object. The basic principle of voxelization involves creating a 3D volumetric grid on the input point cloud data, then setting a voxel resolution, and uniformly dividing the 3D volumetric grid with the voxel resolution as a basic unit to form a set of regular 3D cubes (i.e., voxels). Then, within each 3D cube, the center point or centroid of all the point cloud data within the cube is used to approximately represent all points within the cube, and after the voxelization, the corresponding occupancy information in voxel form is obtained. As an alternative to step S131, the occupancy information in voxel form may also be directly obtained from public datasets. The occupancy information in voxel form may include one or more of an occupancy state (for example, occupied, unoccupied, unknown), a semantic category (for example, vehicle, pedestrian, tree), a speed level (for example, static, dynamic), or a speed value of a voxel.

Optionally, the occupancy information in voxel form may originate from a combination of any one or more of single-frame laser point cloud data, temporally fused laser point cloud data, or point cloud data generated from visual three-dimensional reconstruction.

Next, in step S132, offline data processing is performed on the occupancy information in voxel form to generate compressed occupancy information in pillar form.

Step S132 is intended for voxel-to-pillar form conversion. As mentioned above, the form conversion in step S132 occurs during the training data processing, rather than in a network inference step or a post-processing step. The form conversion process according to one or more embodiments of the present application will be described in detail below with reference to FIG. 2.

As shown in FIG. 2, in step S210, planar grid-based processing is first performed. For example, first, a plane with z=0 is defined as a reference plane in an ego-vehicle coordinate system, and on the reference plane, an x- and y-axis are divided into regular two-dimensional grid cells (for example, a size of each grid is 0.2 m×0.2 m) according to a first resolution (for example, 0.2 m); and a three-dimensional space falling within a two-dimensional grid cell on an xy plane is then projected into the two-dimensional grid cell. The ego-vehicle coordinate system herein is a coordinate system established with the vehicle itself as a reference system. In the ego-vehicle coordinate system, the center of mass of the vehicle (or the midpoint of a rear axle of the vehicle) is usually selected as an origin, the forward direction of the vehicle is defined as a positive direction of the x-axis, the left side of the vehicle is defined as a positive direction of the y-axis, and the top of the vehicle is defined as a positive direction of the z-axis.

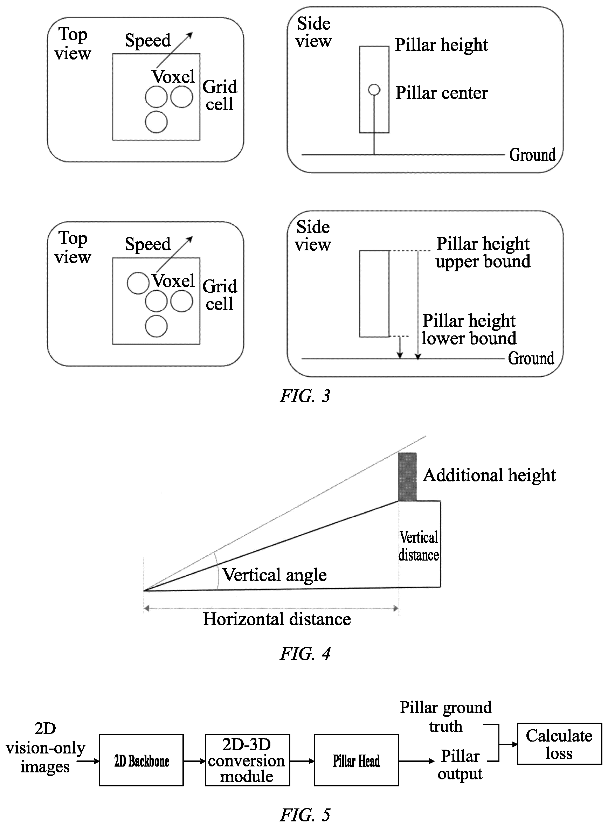

Optionally, step S210 further includes: selecting voxels whose occupancy state is occupied as occupied voxels (occ_voxel); and representing an aggregation of one or more occ_voxels falling within a two-dimensional grid cell as one or two pillars, and generating occupancy information of each pillar. Generally, for a two-dimensional grid cell, it is sufficient to represent an aggregation of occ_voxels falling within the two-dimensional grid cell as one pillar. However, when processing a special suspended obstacle (for example, a double-layer object), since one pillar cannot fully and accurately describe occupancy discontinuities in a z-axis direction within the two-dimensional grid cell, the occ_voxels falling within the two-dimensional grid cell may be represented as two pillars. FIG. 3 shows a schematic diagram of representing an aggregation of voxels as one pillar according to one or more embodiments of the present application. It should be noted that voxels shown in the figure are occ_voxels, and representations of the voxels and pillars are not limited to specific shapes and annotation information shown in the figure.

In step S220, the voxels are filtered. In one example, occ_voxels of an undesired type may be filtered out based on the semantic category. For example, occ_voxels with a semantic category of ground are filtered out.

In another example, a retention range of the occ_voxels may be determined based on factors such as a vehicle height, a field-of-view perception range, a slope, etc. For example, from the perspective of safe obstacle avoidance for automated driving of the vehicle, if the vehicle travels at a speed of 80 km/h with a deceleration of -3.5 m/s², its forward obstacle avoidance distance is approximately 75 m. If an uphill field of view, for example, a field of view when a road slope is 10% as shown in FIG. 4, is considered, a horizontal distance is approximately 75 m, and a vertical distance is approximately 7.5 m in this scenario. Given an additional height of approximately 2 m (i.e., the vehicle height), a vertical angle is approximately 10.204° and a maximum vertical obstacle avoidance distance is approximately 9.5 m in this case. If left and right rear fields of view with a slope are further considered, a minimum vertical obstacle avoidance distance is approximately -2.5 m. In summary, a z-axis perception range of approximately -2.5 m to 9.5 m needs to be designed. However, designing a pure vision network covering the above-mentioned large range (e.g., with a z-axis span of approximately 12 m) will face the following problem. There is too much interference in the z-axis direction, such as height restriction bars on roads and ceilings of underground parking lots. Due to an excessive amount of redundant data, if a 3D convolutional network is used, a large amount of computing power will be consumed during an inference phase. In this regard, one or more embodiments of the present application filter out occ_voxels whose z-axis coordinates in the ego-vehicle coordinate system are less than a first height threshold z₁ or greater than a second height threshold z₂, leaving only occ_voxels with z ∈ [z₁, z₂]. For example, since the height of the vehicle is approximately 2 m, only occ_voxels with z ∈ [-1m, 2m] may be retained to filter out irrelevant information interference while ensuring the obstacle avoidance function. Specifically, advantages of such a design lie in that: most suspended obstacles can be removed, reducing the necessity to represent occ_voxels falling within one two-dimensional grid cell as two pillars, without affecting safe obstacle avoidance due to a limited height of the vehicle; and after interfering voxels are reduced, the network learns more easily with the same number of parameters.

In step S230, it is determined whether the number of occ_voxels falling within a pillar is greater than or equal to a third number threshold. If the number of occ_voxels is greater than or equal to the third number threshold, the pillar is labeled as occupied, and upper and lower bounds of a height of the pillar are labeled as maximum and minimum heights of one or more occupied voxels falling within the pillar, respectively (step S240). If the number of the occupied voxels falling within the pillar is less than the third number threshold, the pillar is labeled as unoccupied, and both the upper and lower bounds of the height of the pillar are labeled as 0 (step S250). For example, assuming that an aggregation of occ_voxels falling within one two-dimensional grid cell is represented as one pillar, and that a voxel resolution is 0.1 m, a grid resolution is 0.2 m, and only occ_voxels with z ∈ [-1m, 2m] are retained in the preceding step, there are a total of 120 voxels in each grid cell. If the number of remaining occ_voxels in each grid cell is less than 3, the pillar is labeled as unoccupied; otherwise, the pillar is labeled as occupied, and the upper and lower bounds of the pillar height correspond to the maximum and minimum heights of the occ_voxels within the pillar, respectively. The height here may be an absolute height in the ego-vehicle coordinate system or a height relative to the ground.

In step S260, occupancy information of the pillar is calculated. For example, the occupancy information includes one or more of coordinate information, a semantic category, a speed level, or a speed value.

For example, the coordinate information of the pillar includes one of the following: pillar center coordinates and a pillar height (pillar center, pillar height) in the ego-vehicle coordinate system; upper and lower bounds of the pillar height (pillar height max, pillar height min) in the ego-vehicle coordinate system; the pillar center coordinates, the pillar height, and a ground height (pillar center, pillar height, ground height) in the ego-vehicle coordinate system; and the upper and lower bounds of the pillar height and the ground height (pillar height max, pillar height min, ground height) in the ego-vehicle coordinate system.

For example, a speed of the pillar may be labeled as an average speed of the occ_voxels falling within the pillar. Alternatively, if the average speed of the occ_voxels falling within the pillar is greater than or equal to a fourth speed threshold, the speed of the pillar may be labeled as dynamic; otherwise, it is labeled as static.

For example, a semantic category of the pillar may be determined using a voting mechanism based on semantic categories of the occ_voxels falling within the pillar. The voting mechanism herein refers to a hard voting mechanism; that is, a final result is determined according to the principle of majority rule. For example, if there are three occ_voxels within one pillar, among which the semantic category of two occ_voxels is electric vehicle and the semantic category of one occ_voxel is pedestrian, according to the principle of majority rule, the semantic category of the pillar should be determined as electric vehicle.

Referring back to FIG. 1, after the voxel-to-pillar form conversion, in step S133, the grid prediction model is trained using the training dataset containing the sample images and the ground truth information of the sample images.

FIG. 5 shows a schematic diagram of a network design according to one or more embodiments of the present application. For example, in the network design, a 2D backbone part and a 2D-3D conversion module may use a BEV Depth scheme, a BEV Former scheme, a BEV Det scheme, etc. Since the data has been converted into pillar form, a head part of the model may use 2D convolution instead of 3D convolution, where the more convolutions there are in the head part, the more times the computational amount the present solution reduces compared with the model output in voxel form. In addition, since the data in pillar form reduces a data processing amount by a factor corresponding to the number of voxels along the z-axis compared with the data in voxel form, the computational amount of the head part is significantly reduced.

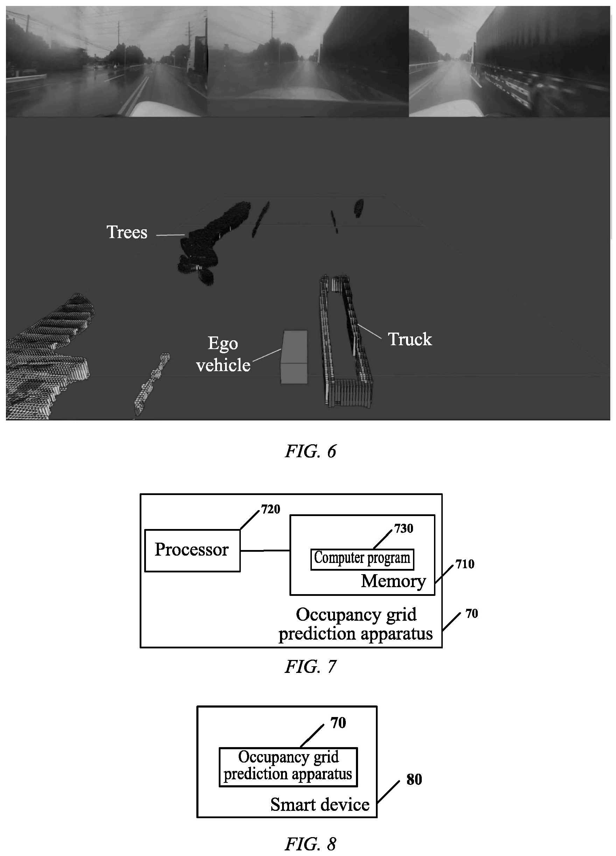

FIG. 6 shows a schematic diagram of model input and output according to one or more embodiments of the present application. Three views shown in the top part of FIG. 6 respectively correspond to 2D vision-only images acquired by a left-front camera, a front camera, and a right-front camera of a vehicle, and the bottom part of FIG. 6 shows occupancy results in pillar form output by the grid prediction model, where the ego vehicle is identified by a cube, and objects (e.g., a truck, trees) in the vision-only images are identified in pillar form.

The occupancy grid prediction method 10 according to one or more embodiments of the present application reduces the high transmission pressure that can arise when the model output data is transmitted directly downstream or for visualization of mass-produced vehicles. In addition, since the model output of the occupancy grid prediction method 10 is directly in pillar form, a process of post-processing the output in voxel form to generate an output in pillar form may be omitted. Furthermore, when the precision requirements for data in the post-processing process are not high and there is much redundant information, for example, when only obstacle edge information needs to be retained or temporal fusion processing needs to be performed, the computational amount in pillar form is much lower than that in voxel form.

FIG. 7 is a schematic block diagram of an occupancy grid prediction apparatus 70 according to one or more embodiments of the present application. The occupancy grid prediction apparatus 70 includes a memory 710, a processor 720, and a computer program 730 stored on the memory 710 and executable on the processor 720, where execution of the computer program 730 causes the occupancy grid prediction method 10 as shown in FIG. 1 to be performed. For example, the occupancy grid prediction apparatus 70 may be a part of an electronic control unit (ECU) of a head unit system, or a control unit of an automated driving system. For example, the occupancy grid prediction apparatus 70 may alternatively be a control unit in another terminal (for example, a smartphone or another edge device with limited computing power) that can be communicatively linked to the vehicle.

FIG. 8 is a schematic block diagram of a smart device 80 according to one or more embodiments of the present application. The smart device 80 has the occupancy grid prediction apparatus 70 as shown in FIG. 7. In some embodiments of the present application, the smart device 80 further includes at least one sensor, such as a video acquisition unit, configured to sense information. The sensor is communicatively connected to any type of processor mentioned in the present application. Optionally, the smart device 80 may further include an automated driving system configured to guide the smart device to drive autonomously or assist in driving. The processor communicates with the sensor and/or the automated driving system to perform the method described in any one of the above embodiments. For example, the smart device 80 may include a driving device, a smart vehicle, an electric vehicle, a robot, etc.

In addition, as described above, the present application may also be implemented as a computer storage medium, in which a program for causing a computer to perform the occupancy grid prediction method 10 shown in FIG. 1 is stored. Here, various forms of computer storage media, for example, a disk (for example, a magnetic disk and an optical disc), a card (for example, a memory card and an optical card), a semiconductor memory (for example, a ROM and a non-volatile memory), and a tape (for example, a magnetic tape and a cassette tape), may be used as the computer storage medium.

Various embodiments provided in the present application may be implemented by hardware, software, or a combination of hardware and software where applicable. In addition, without departing from the scope of the present application, various hardware components and/or software components described in this specification may be combined into a combined component including software, hardware, and/or both where applicable. Without departing from the scope of the present application, various hardware components and/or software components described in this specification may be separated into sub-components including software, hardware, or both where applicable. In addition, where applicable, it is contemplated that software components can be implemented as hardware components, and vice versa.

Software (such as program code and/or data) in the present application may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The related user personal information that may be involved in the embodiments of the present application is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the present application varies depending on the specific product/service scenario, and shall be subject to the specific scenario in which the user uses the product/service. It may involve account information, device information, driving information, vehicle information, or other related information of the user. The applicant treats and handles the user's personal information with a high degree of diligence.

The present application places great importance on the security of the user personal information, and reasonable and feasible security protection measures that comply with industry standards have been taken to protect information of the user and prevent the personal information from unauthorized access, disclosure, use, modification, damage, or loss.

The embodiments and examples herein are provided to describe as adequately as possible embodiments according to the present application and specific applications thereof and thus enable those skilled in the art to implement and use the present application. However, those skilled in the art will know that the above descriptions and examples are provided merely for description and illustration. The descriptions provided are not intended to cover all aspects of the present application or limit the present application to the disclosed precise forms.

## Claims

1. An occupancy grid prediction method, **characterized in that** the method comprises the steps of:
obtaining vision-only images of surroundings of a vehicle;
inputting the vision-only images into an occupancy grid prediction model; and
determining, using the occupancy grid prediction model, occupancy results of objects in the vision-only images as a model output, wherein the model output is occupancy results in pillar form, and the occupancy grid prediction model is constructed based on a training dataset containing sample images and ground truth information of the sample images, the ground truth information being directly generated from point cloud data or being converted from occupancy information in voxel form generated based on the point cloud data.

2. The occupancy grid prediction method according to claim 1, wherein the occupancy information in voxel form is generated at least based on the step of:
dividing a three-dimensional space into regular voxels and quantizing point cloud data in each voxel into occupancy information, wherein the occupancy information comprises an occupancy state, a semantic category, a speed level, or a speed value of the voxel or a combination thereof.

3. The occupancy grid prediction method according to claim 1 or 2, wherein the ground truth information being converted from the occupancy information in voxel form generated based on the point cloud data comprises:
performing offline data processing on the occupancy information in voxel form to generate compressed occupancy information in pillar form, and wherein the occupancy information in voxel form is generated based on one or more of single-frame laser point cloud data, temporally fused laser point cloud data, or point cloud data generated from visual three-dimensional reconstruction.

4. The occupancy grid prediction method according to claim 3, wherein performing the offline data processing on the occupancy information in voxel form comprises:
selecting voxels whose occupancy state is occupied as occupied voxels;
projecting a three-dimensional space into two-dimensional grid cells;
representing an aggregation of one or more occupied voxels falling within one two-dimensional grid cell as one or two pillars; and
generating occupancy information of each pillar.

5. The occupancy grid prediction method according to claim 4, wherein projecting the three-dimensional space into the two-dimensional grid cells comprises:
in an ego-vehicle coordinate system, dividing an x-axis and a y-axis into regular two-dimensional grid cells according to a first resolution, wherein a positive direction of the x-axis is a forward direction of the vehicle, and a positive direction of the y-axis is a left side of the vehicle; and
projecting a three-dimensional space falling within a two-dimensional grid cell on an xy plane into the two-dimensional grid cell, wherein the xy plane is a plane formed by the x-axis and the y-axis.

6. The occupancy grid prediction method according to claim 4, wherein performing the offline data processing on the occupancy information in voxel form further comprises:
filtering out occupied voxels of an undesired type based on a semantic category; and/or
filtering out occupied voxels whose z-axis coordinate is less than a first height threshold or greater than a second height threshold in the ego-vehicle coordinate system.

7. The occupancy grid prediction method according to claim 4, wherein generating the occupancy information of each pillar comprises:
if a number of the occupied voxels falling within the pillar is greater than or equal to a third number threshold, labeling the pillar as occupied, and labeling upper and lower bounds of a height of the pillar as maximum and minimum heights of one or more occupied voxels falling within the pillar, respectively; and
if the number of the occupied voxels falling within the pillar is less than the third number threshold, labeling the pillar as unoccupied, and labeling both the upper and lower bounds of the height of the pillar as 0.

8. The occupancy grid prediction method according to claim 4, wherein the occupancy information of the pillar comprises coordinate information of the pillar, and the coordinate information comprises one of:
pillar center coordinates and a pillar height in an ego-vehicle coordinate system;
upper and lower bounds of the pillar height in the ego-vehicle coordinate system;
the pillar center coordinates, the pillar height, and a ground height in the ego-vehicle coordinate system; or
the upper and lower bounds of the pillar height and the ground height in the ego-vehicle coordinate system.

9. The occupancy grid prediction method according to claim 4, wherein generating the occupancy information of each pillar comprises:
labeling a speed of the pillar as an average speed of one or more occupied voxels falling within the pillar; or
if the average speed of the one or more occupied voxels falling within the pillar is greater than or equal to a fourth speed threshold, labeling the speed of the pillar as dynamic; otherwise, labeling the speed as static.

10. The occupancy grid prediction method according to claim 4, wherein generating the occupancy information of each pillar comprises:
determining a semantic category of the pillar using a voting mechanism based on semantic categories of one or more occupied voxels falling within the pillar.

11. The occupancy grid prediction method according to claim 1, wherein two-dimensional convolution is used in a head part of the occupancy grid prediction model.

12. An occupancy grid prediction apparatus, **characterized by** comprising: a memory; a processor; and a computer program stored on the memory and executable on the processor, wherein execution of the computer program causes the occupancy grid prediction method according to any one of claims 1 to 11 to be performed.

13. A smart device, **characterized by** having the occupancy grid prediction apparatus according to claim 12.

14. A computer storage medium, **characterized by** comprising instructions that, when executed, cause the occupancy grid prediction method according to any one of claims 1 to 11 to be performed.
